# EUROPEAN PATENT APPLICATION

(11) **EP 4 495 584 A1**
(43) Date of publication of application: **22.01.2025**
(21) Application number: 22932213.6
(22) Date of filing: 18.03.2022
(51) Int. Cl.: G01N 21/90

(54) **FOREIGN MATTER INSPECTION DEVICE**

(71) Applicant: NEC Corporation, 108-8001 Tokyo (JP)
(72) Inventor: YACHIDA, Shoji, Tokyo 108-8001 (JP)
(74) Representative: Betten & Resch
(86) International application number: PCT/JP2022/012744
(87) International publication number: WO 2023/175943

(57) **Abstract**

A foreign object inspection device includes a detection means and a display control means. The detection means detects a foreign object existing in liquid and the type of the foreign object from a plurality of images obtained by continuously capturing a container in which the liquid is contained. The display control means outputs the type of the detected foreign object to a display device.

## Description

### TECHNICAL FIELD

The present invention relates to a foreign object inspection device, a foreign object inspection method, and a storage medium.

### BACKGROUND ART

A device for inspecting presence or absence of a foreign object in the liquid contained in a container has been proposed.

For example, in Patent Literature 1, a moving locus of a floating object is computed from a plurality of images obtained by continuously capturing the liquid in a container with a camera, and on the basis of the features of the moving locus, it is determined whether the floating object is a bubble or a foreign object, and the determination result is displayed on a screen of a display device.

### CITATION LIST

### PATENT LITERATURE

Patent Literature 1: WO 2021/214994 A

### SUMMARY OF INVENTION

### TECHNICAL PROBLEM

However, when a foreign object is detected in the liquid in a container, it is difficult to recognize the type of the foreign object. In the case where a foreign object is detected in the liquid in a container produced on a production line, it is necessary to immediately improve the production line so as not to repeat the similar phenomenon. However, since there is a possibility that any objects may be mixed at any locations, when the type of the mixed foreign object is unknown, it is difficult to identify the contamination route.

The present invention provides a foreign object inspection device that solves the above-described problem.

### SOLUTION TO PROBLEM

A foreign object inspection device, according to one aspect of the present invention, is configured to include
a detection means for detecting a foreign object existing in liquid and a type of the foreign object from a plurality of images obtained by continuously capturing a container in which the liquid is contained, and
a display control means for outputting the type of the detected foreign object to a display device.

A foreign object inspection method, according to another aspect of the present invention, is configured to include
detecting a foreign object existing in liquid and a type of the foreign object from a plurality of images obtained by continuously capturing a container in which the liquid is contained, and
outputting the type of the detected foreign object to a display device.

A computer-readable medium, according to another aspect of the present invention, is configured to store thereon a program for causing a computer to execute processing to
detect a foreign object existing in liquid and a type of the foreign object from a plurality of images obtained by continuously capturing a container in which the liquid is contained, and
output the type of the detected foreign object to a display device.

### ADVANTAGEOUS EFFECTS OF INVENTION

Since the present invention has the configurations described above, the type of a detected foreign object is output to the display device, so that the type of the foreign object can be recognized.

### BRIEF DESCRIPTION OF DRAWINGS

[Fig. 1] Fig. 1 is a block diagram of an inspection system according to a first example embodiment of the present invention.
[Fig. 2] Fig. 2 is a block diagram illustrating an example of an inspection device according to the first example embodiment of the present invention.
[Fig. 3] Fig. 3 illustrates a configuration example of image information according to the first example embodiment of the present invention.
[Fig. 4] Fig. 4 illustrates a configuration example of tracking information according to the first example embodiment of the present invention.
[Fig. 5] Fig. 5 illustrates a configuration example of inspection result information according to the first example embodiment of the present invention.
[Fig. 6] Fig. 6 is a schematic diagram illustrating an example of a moving locus still image in which moving locus information of a foreign object is visualized according to the first example embodiment of the present invention.
[Fig. 7] Fig. 7 illustrates a configuration example of foreign object contamination factor information according to the first example embodiment of the present invention.
[Fig. 8] Fig. 8 is a flowchart illustrating an example of an operation performed by an inspection system from the start of inspection until the end of the inspection with respect to one container in the first example embodiment of the present invention.
[Fig. 9] Fig. 9 illustrates an example of an inspection result display screen according to the first example embodiment of the present invention.
[Fig. 10] Fig. 10 is an explanatory diagram of a modification of the first example embodiment of the present invention.
[Fig. 11] Fig. 11 is a block diagram of a foreign object inspection device according to a second example embodiment of the present invention.

### DESCRIPTION OF EMBODIMENTS

Next, example embodiments of the present invention will be described in detail with reference to the drawings.

### [First Example Embodiment]

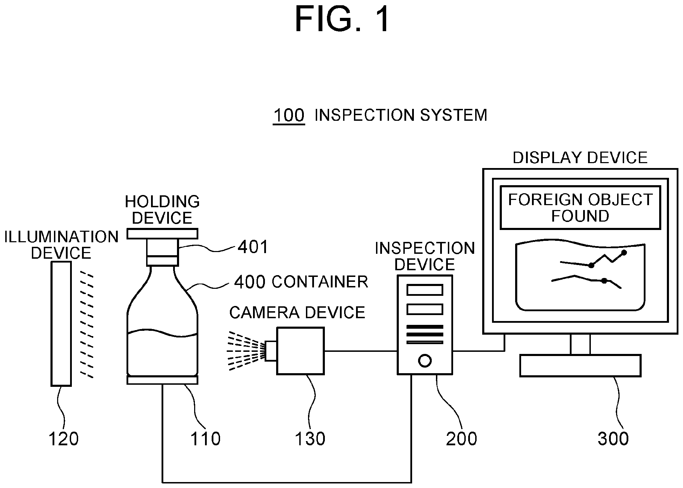

Fig. 1 is a block diagram of an inspection system 100 according to a first example embodiment of the present invention. Referring to Fig. 1, the inspection system 100 is a system for inspecting presence/absence of a foreign object in the liquid contained in a container 400. The inspection system 100 includes a holding device 110, an illumination device 120, a camera device 130, an inspection device 200, and a display device 300, as main constituent elements.

The container 400 is a transparent or translucent container such as a glass bottle or a pet bottle. The container 400 is filled with liquid such as medical agents or water and sealed. The liquid contained in the container 400 has a possibility that foreign objects are mixed. It is assumed that foreign objects include, for example, glass pieces, plastic pieces, rubber pieces, hair/fabric pieces, metal pieces, and the like.

The holding device 110 is configured to hold the container 400 in a predetermined posture. Any posture is acceptable as a predetermined posture. For example, a posture when the container 400 is in an upright state may be set as a predetermined posture. Alternatively, a posture when the container 400 is tilted by a predetermined angle from the upright posture may be set as a predetermined posture. Hereinafter, description will be given based on the premise that a predetermined posture is an upright posture of the container 400. The mechanism of holding the container 400 in an upright posture is arbitrary. For example, the holding mechanism may be configured to include a pedestal on which the container 400 is placed at an upright posture, a member that presses a top surface portion of a rubber stopper 401 that is a vertex portion of the container 400 placed on the pedestal, and the like.

Further, the holding device 110 is configured to, in a state of holding the container 400, rotate, tilt, or shake the container 400 in a predetermined direction from the upright posture. Any mechanism may be used for rotating, tilting, or shaking the container 400. For example, the mechanism of rotating, tilting, or shaking may be configured to include a motor that rotates, tilts, or shakes the entire holding mechanism in a state of holding the container 400.

The holding device 110 is connected with the inspection device 200 in a wired or wireless manner. When the holding device 110 is activated by an instruction from the inspection device 200, the holding device 110 rotates, tilts, or shakes the container 400 in a predetermined direction from the upright posture in a state of holding the container 400. Further, when the holding device 110 is stopped by an instruction from the inspection device 200, the holding device 110 stops operation to rotate, tilt, or shake the container 400, and restore the state to a state of holding the container 400 in an upright posture.

When the container 400 is rotated, tilted, or shaken as described above, a state in which a foreign object attached to the inner bottom surface or the like of the container 400 moves on the bottom surface and/or floats is obtained. At the same time, a bubble attached to the inner wall surface or the like of the container 400 or a bubble mixed in the process that the liquid flows may float in the liquid. Such a state continues during the period in which the liquid flows by the inertia even after the container 400 is made still. Accordingly, the inspection device 200 needs to identify whether the floating object is a foreign object or a bubble.

The illumination device 120 is configured to irradiate the liquid contained in the container 400 with illumination light. For example, the illumination device 120 is a surface light source in a size corresponding to the size of the container 400. The illumination device 120 is disposed on a side opposite to the side where the camera device 130 is disposed when viewed from the container 400. That is, illumination provided by the illumination device 120 is transparent illumination. However, the position of the illumination device 120 is not limited to this. For example, it may be provided on the bottom surface side of the container 400 or provided at a position adjacent to the camera device 130 and used as reflection light illumination for imaging.

The camera device 130 is a high-speed imaging device that continuously images the liquid in the container 400 at a predetermined high frame rate, from a predetermined position on a side opposite to the side where the illumination device 120 is provided when viewed from the container 400. The camera device 130 may be configured to include a color camera or a black and white equipped with a charge-coupled device (CCD) image sensor or a complementary MOS (CMOS) image sensor having a pixel capacity of about several millions pixels. The camera device 130 is connected with the inspection device 200 in a wired or wireless manner. The camera device 130 is configured to transmit, to the inspection device 200, time-series images captured by imaging together with information indicating the imaging time and the like.

The display device 300 is a display device such as a liquid crystal display (LCD). The display device 300 is connected with the inspection device 200 in a wired or wireless manner. The display device 300 is configured to display inspection results and the like of the container 400 performed by the inspection device 200.

The inspection device 200 is an information processing device that performs image processing on time-series images captured by the camera device 130 and inspects presence or absence of a foreign object and the type of a foreign object in the liquid contained in the container 400. The inspection device 200 is connected with the holding device 110, the camera device 130, and the display device 300 in a wired or wireless manner.

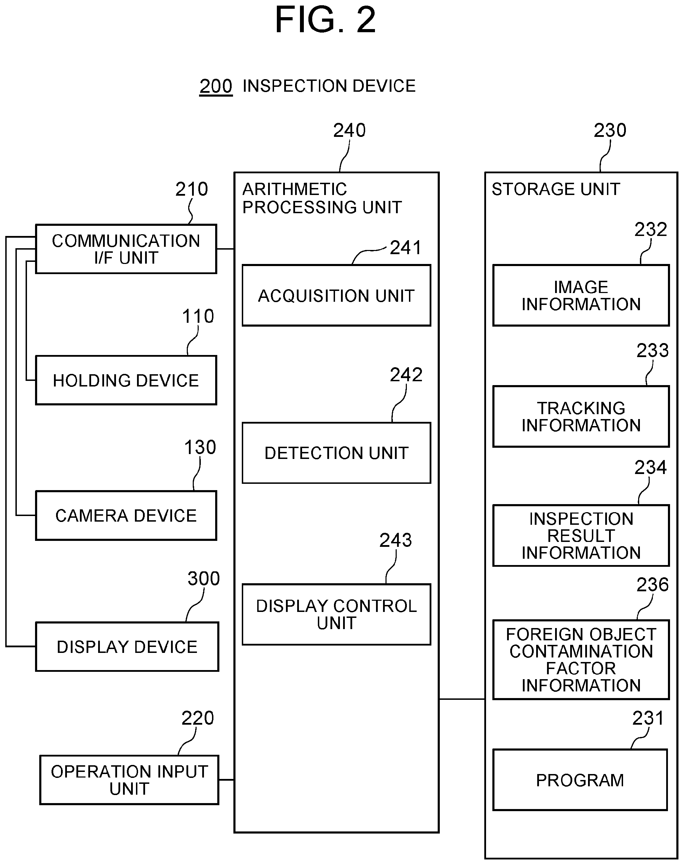

Fig. 2 is a block diagram illustrating an example of the inspection device 200. Referring to Fig. 2, the inspection device 200 includes a communication I/F unit 210, an operation input unit 220, a storage unit 230, and an arithmetic processing unit 240.

The communication I/F unit 210 is configured of a data communication circuit, and is configured to perform data communication with the holding device 110, the camera device 130, the display device 300, and other external devices, not illustrated, in a wired or wireless manner. The operation input unit 220 is configured of operation input devices such as a keyboard and a mouse, and is configured to detect operation by an operator and output it to the arithmetic processing unit 240.

The storage unit 230 is configured of one or more storage devices of one or a plurality of types such as a hard disk and a memory, and is configured to store therein processing information necessary for various types of processing performed in the arithmetic processing unit 240 and a program 231. The program 231 is a program for implementing various processing units by being read and executed by the arithmetic processing unit 240, and is read in advance from an external device or a storage medium, not illustrated, via a data input-output function of the communication I/F unit 210 or the like and is stored in the storage unit 230. The main processing information to be stored in the storage unit 230 includes image information 232, tracking information 233, inspection result information 234, and foreign object contamination factor information 236.

The image information 232 includes time-series images obtained by sequentially capturing the liquid in the container 400 with the camera device 130. In the case where a floating object exists in the liquid in the container 400, an image of the floating object is shown in the image information 232.

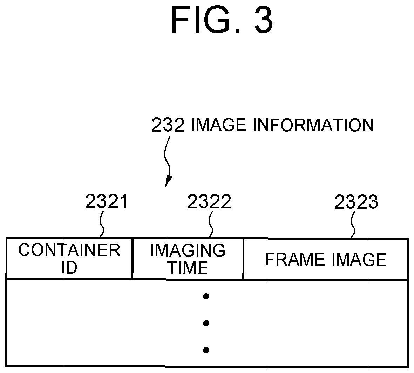

Fig. 3 illustrates a configuration example of the image information 232. The image information 232 of this example is configured of an entry consisting of a set of a container ID 2321, imaging time 2322, and a frame image 2323. In the field of the container ID 2321, an ID uniquely identifying the container 400 is set. As the container ID 2321, a serial number assigned to the container 400, a barcode attached to the container 400, object fingerprint information taken from a rubber stopper 401 of the container 400, or the like may be used. In the fields of the imaging time 2322 and the frame image 2323, the imaging time and a frame image are set, respectively. The imaging time 2322 is set to have precision (for example, millisecond units) with which a frame image can be identified while being distinguished from other frame images having the same container ID. As the imaging time 2322, an elapsed time from the point of time at which rotation, tilt, or shake of the container 400 is stopped may be used, for example. In the example of Fig. 3, the container ID 2321 is associated with each frame image 2323. However, the container ID 2321 may be associated with each group consisting of a plurality of frame images 2323.

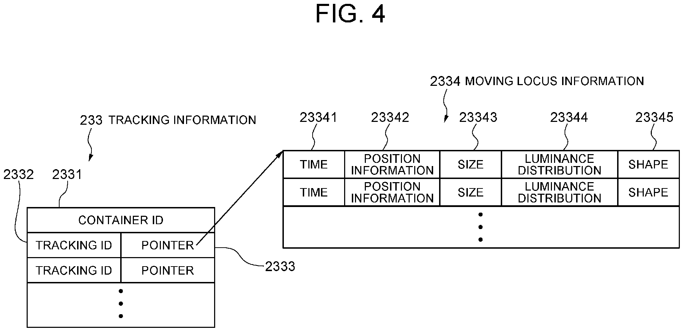

The tracking information 233 includes time-series data representing the moving locus of a floating object that is obtained by detecting and tracking an image of the floating object existing in the liquid in the container 400. Fig. 4 illustrates a configuration example of the tracking information 233. The tracking information 233 of this example is configured of entries of a container ID 2331 and a set of a tracking ID 2332 and a pointer 2333. In the entry of the container ID 2331, an ID uniquely identifying the container 400 is set. The entry consisting of a set of the tracking ID 2332 and the pointer 2333 is set for each floating object to be tracked. In the field of tracking ID 2332, an ID for distinguishing the floating object subject to tracking from another floating object in the same container 400 is set. In the field of pointer 2333, a pointer to the moving locus information 2334 of the floating object subject to tracking is set.

The moving locus information 2334 is configured of an entry consisting of time 23341, position information 23342, size 23343, luminance distribution 23344, and shape 23345. In the fields of the time 23341, the position information 23342, the size 23343, the luminance distribution 23344, and the shape 23345, the imaging time, coordinate values indicating the location of the floating object subject to tracking at the imaging time, the size of the floating object, the luminance distribution in the floating object region, and the shape of the floating object are set. As the imaging time set in the time 23341, the imaging time 2322 of the frame image is used. Coordinate values may be, for example, coordinate values in a predetermined coordinate system. A predetermined coordinate system may be a camera coordinate system viewed with the camera being the center, or a world coordinate system in which a position in a real space is considered as the center. The entries of the moving locus information 2334 are aligned in the order of the time 23341. The time 23341 of the top entry is tracking start time. The time 23341 of the bottom entry is tracking end time. The time 23341 of the entries other than the top and bottom entries is tracking intermediate time.

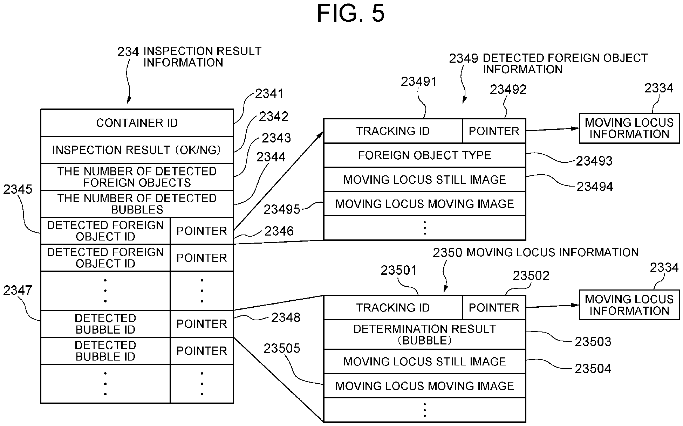

The inspection result information 234 includes information corresponding to a result of inspecting the container 400. Fig. 5 illustrates a configuration example of the inspection result information 234. The inspection result information 234 of this example is configured of entries of a container ID 2341, an inspection result 2342, the number of detected foreign objects 2343, the number of detected bubbles 2344, a set of a detected foreign object ID 2345 and a pointer 2346, and a set of a detected bubble ID 2347 and a pointer 2348. In the entry of the container ID 2341, an ID uniquely identifying the container 400 subject to inspection is set. In the entry of the inspection result 2342, an inspection result of either OK (inspection pass) or NG (inspection failure) is set. In the entry of the number of detected foreign objects 2343, the total number of detected foreign objects and/or the total number of foreign objects for each type is set. In the entry of the number of detected bubbles 2344, the total number of detected bubbles is set.

An entry of a set of the detected foreign object ID 2345 and the pointer 2346 is provided for each detected foreign object. In the field of the detected foreign object ID 2345, an ID for distinguishing the detected foreign object from another foreign object in the same container 400 is set. In the field of the pointer 2346, a pointer to the detected foreign object information 2349 of the detected foreign object is set.

An entry of a set of the detected bubble ID 2347 and the pointer 2348 is provided for each detected bubble. In the field of the detected bubble ID 2347, an ID for distinguishing the detected bubble from another bubble in the same container 400 is set. In the field of the pointer 2348, a pointer to the detected bubble information 2350 of the detected bubble is set.

The detected foreign object information 2349 is configured of entries of a set of a tracking ID 23491 and a pointer 23492, foreign object type 23493, a moving locus still image 23494, and a moving locus moving image 23495. In the field of the tracking ID 23491, the tracking ID 2332 of the detected foreign object is set. In the field of the pointer 23492, a pointer to the moving locus information 2334 of the detected foreign object is set. In the entry of the foreign object type 23493, the type of the determined foreign object is set. In the entry of the foreign object type 23493, the probability of the determination result may be set, in addition to the foreign object type. The probability of the determination result is an index representing the likelihood of the determination result.

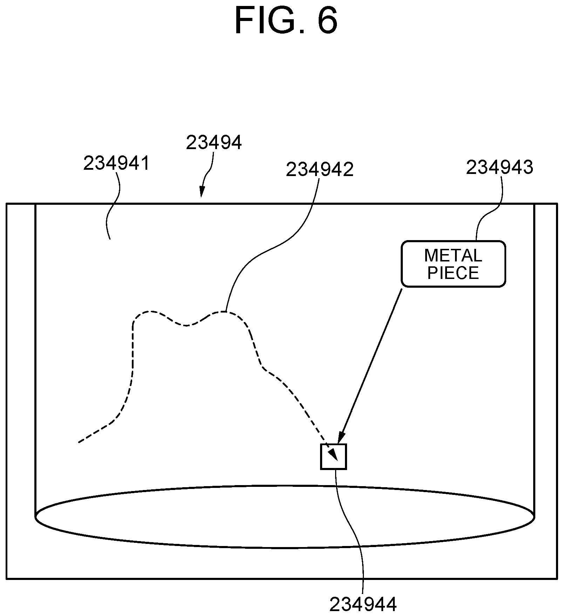

In the entry of the moving locus still image 23494, at least one still image in which the moving locus information 2334 of the detected foreign object is visualized is set. Fig. 6 is a schematic diagram illustrating an example of the moving locus still image 23494. The moving locus still image 23494 of this example is a synthetic image in which a background image 234941 and a moving locus image 234942 are overlapped.

As the background image 234941, a frame image having the highest reliability in which the detected foreign object is determined to be a foreign object of a specific type rather than a bubble may be used. However, as the background image 234941, a frame image other than that described above, that is, any frame image in which the detected foreign object is shown, for example, may be used.

The moving locus image 234942 is configured to include a line representing the moving locus of the foreign object. While a broken line is used in the example of Fig. 6, it may be a solid line. **In** the moving locus image 234942, an arrow indicating the moving direction of the foreign object is added. However, an aspect of indicating the moving direction of the foreign object is not limited to an arrow. For example, the moving method of the foreign object may be indicated by changing the line type, width, color, and the like of the line indicating the moving locus of the foreign object according to the elapse of moving time. Moreover, the display mode of the moving locus image 234942 may be changed according to the moving speed of the foreign object. For example, the moving speed of the foreign object may be indicated by changing the line type, width, color, and the like of the line according to the moving speed of the foreign object.

In the moving locus still image 23494, a display field 234943 for displaying the type of the foreign object is drawn. In the display field 234943, the type of the foreign object set in the foreign object type 23493 is shown in text, for example. Moreover, in the moving locus still image 23494, an index 234944 indicating a part serving as the determination basis for the foreign object is drawn. In Fig. 6, the index 234944 is a rectangle surrounding the part serving as the determination basis, but it is not limited thereto. The part serving as the determination basis means a part of the moving locus information based on which the foreign object is determined not to be a bubble but to be a foreign object of a specific type. For example, since a metal piece such as a stainless piece has a large specific gravity, it is hardly affected by the liquid movement, so that a moving locus that falls almost linearly is obtained. Therefore, the part that falls linearly serves as the basis for determining that the foreign object is a metal piece. As for a foreign object such as a rubber piece having a smaller specific gravity compared with that of a metal piece, the part that falls up to a position lower than the position at the time of tracking start time may serve as the determination basis.

Referring to Fig. 5 again, in the entry of the moving locus moving image 23495, a moving image in which the moving locus information 2334 of the detected foreign object is visualized is set.

The detected bubble information 2350 is configured of entries of a set of a tracking ID 23501 and a pointer 23502, a determination result 23503, a moving locus still image 23504, and a moving locus moving image 23505. In the field of the tracking ID 23501, the tracking ID 2332 of the detected bubble is set. In the field of the pointer 23502, a pointer to the moving locus information 2334 of the detected bubble is set. In the entry of the determination result 23503, text describing that the determination result is "bubble" is set. In the entry of the determination result 23503, the probability of the determination result may also be set.

In the entry of the moving locus still image 23504, at least one still image in which the moving locus information 2334 of the detected bubble is visualized is set. In the entry of the moving locus moving image 23505, a moving image in which the moving locus information 2334 of the detected bubble is visualized is set.

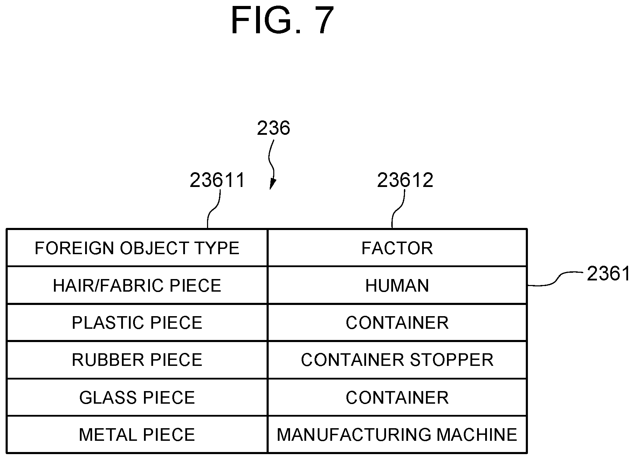

Referring to Fig. 2 again, the foreign object contamination factor information 236 includes information related to a factor of contamination of a foreign object in the container 400. Fig. 7 illustrates an example of the foreign object contamination factor information 236. In this example, the foreign object contamination factor information 236 is configured of a plurality of entries 2361, and each entry 2361 is configured of a set of a foreign object type 23611 and a factor 23612. In the field of the foreign object type 23611, a hair/fabric piece, a plastic piece, a rubber piece, a glass piece, or a metal piece is set, for example. In the factor 23612, "person" with respect to a hair/fabric piece, "container" with respect to a plastic piece and a glass piece, "container stopper" with respect to a rubber piece, "manufacturing machine" with respect to a metal piece, is set, for example. This indicates that a metal piece is a foreign object derived from a manufacturing machine, for example.

The arithmetic processing unit 240 includes a microprocessor such as an MPU and the peripheral circuits thereof, and is configured to read and execute the program 231 from the storage unit 230 to allow the hardware and the program 231 to cooperate with each other to thereby implement the various processing units. The main processing units implemented by the arithmetic processing unit 240 include an acquisition unit 241, a detection unit 242, and a display control unit 243.

The acquisition unit 241 is configured to acquire the image information 232 showing an image of a floating object existing in the liquid contained in the container 400, by controlling the holding device 110 and the camera device 130. The acquisition unit 241 is also configured to acquire the tracking information 233 including time-series data representing the moving locus of the floating object by analyzing the image information 232.

The detection unit 242 is configured to detect whether or not a foreign object exists in the liquid in the container 400, and to detect the type of the existing foreign object, on the basis of the tracking information 233 acquired by the acquisition unit 241. The detection unit 242 is also configured to create inspection result information 234 on the basis of the detection result, and store it in the storage unit 230.

The display control unit 243 is configured to, when the inspection result information 234 is created by the detection unit 242, output the inspection result information 234 to the display device 300 as soon as possible.

Next, overall operation of the inspection system 100 according to the present embodiment will be described.

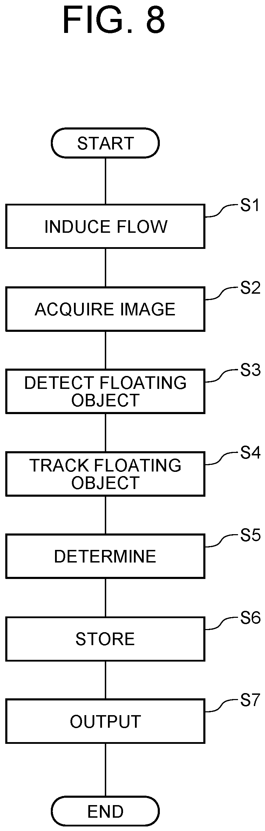

Fig. 8 is a flowchart illustrating an example of operation performed by the inspection system 100 from the start of inspection until the end of the inspection with respect to one container 400. Referring to Fig. 8, first, the acquisition unit 241 induces flowing of the liquid in the container 400 (step S1). For example, the acquisition unit 241 allows the container 400 to stand still at the upright posture after rotating/tilting/shaking the container 400 by the holding device 110. Then, the acquisition unit 241 continuously images the liquid in the container 400 with the camera device 130 under the transmitted illumination by the illumination device 120, to thereby acquire time-series images captured through a predetermined time length at a predetermined frame rate (step S2). The time-series images acquired from the camera device 130 by the acquisition unit 241 are stored in the storage unit 230 as the image information 232. As illustrated in Fig. 3 as an example, the image information 232 is configured of an entry consisting of a set of the container ID 2321, the imaging time 2322, and the frame image 2323.

Then, the detection unit 242 detects a floating object existing in the liquid, in the time-series images included in the image information 232 (step S3). Then, the detection unit 242 tracks the detected floating object in the time-series images included in the image information 232 (step S4). The detection unit 242 stores the tracking result of each of the tracked floating objects as the tracking information 233, in the storage unit 230. As illustrated in Fig. 4 as an example, the tracking information 233 includes the moving locus information 2334 of each floating object subject to tracking. A plurality of entries of the moving locus information 2334 are put into order according to the time 23341, and each of the entries includes the position information 23342, the size 23343, the luminance distribution 23344, and the shape 23345 of the floating object subject to tracking.

Then, for each floating object specified by the tracking ID 2332 included in the tracking information 233, the detection unit 242 determines whether the floating object is a foreign object or a bubble on the basis of the moving locus information 2334 of the floating object, and also determines the type when the floating object is a foreign object (step S5). Then, the detection unit 242 creates the inspection result information 234 in which the determination result of each floating object is recorded, and stores it in the storage unit 230 (step S6). As illustrated in Fig. 5, the inspection result information 234 includes the container ID 2341, the inspection result 2342, the number of detected foreign objects 2343, the number of detected bubbles 2344, the detected foreign object information 2349 for each detected foreign object, and the detected bubble information 2350 for each detected bubble. The detected foreign object information 2349 also includes the foreign object type 23493, the moving locus still image 23494, the moving locus moving image 23495, and the like. The detected bubble information 2350 includes the determination result (bubble) 23503, the moving locus still image 23504, the moving locus moving image 23505, and the like.

Then, the display control unit 243 outputs the inspection result information 234 of the container 400 to the display device 300 (step S7).

Next, the acquisition unit 241, the detection unit 242, and the display control unit 243 will be described in detail.

First, the details of the acquisition unit 241 will be described.

The acquisition unit 241 first activates the holding device 110 holding the container 400 at an upright posture to rotate, tilt, or shake the container 400 subject to inspection. Then, when a certain period of time elapses from the activation, the acquisition unit 241 stops the holding device 110 to allow the container 400 to stand still at a predetermined posture. By allowing the container 400 to stand still after tilting, shaking, or rotating it a certain period of time as described above, a condition that the liquid flows due to the inertia in the stationary container 400 is obtained. Then, under the transmitted illumination by the illumination device 120, the acquisition unit 241 starts operation to continuously image the liquid in the container 400 with the camera device 130 at a predetermined frame rate. That is, assuming that the time at which the container 400 becomes a stationary state after the rotation, tilting, or shaking is time Ts, the acquisition unit 241 begins the imaging operation from time Ts.

The acquisition unit 241 continues imaging of the liquid in the container 400 continuously with the camera device 130 until time Te at which a predetermined time Tw elapses from time Ts. The predetermined time Tw may be set to, assuming that all floating objects floating in the liquid are bubbles, at least a period of time required for obtaining a moving locus in which all bubbles move toward the upper side of the container 400 or it is not conceivable that they move downward (hereinafter referred to as a minimum imaging time length). The minimum imaging time length may be determined by experiments or the like in advance and fixedly set in the acquisition unit 241. When the time reaches time Te, the acquisition unit 241 may immediately stop imaging with the camera device 130 or continue imaging with the camera device 130 thereafter.

The acquisition unit 241 adds the imaging time and a container **ID** to each of the time-series frame images acquired from the camera device 130, and stores them in the storage unit 230 as the image information 232.

Then, when the time-series frame images for the predetermined time length are acquired, the acquisition unit 241 detects a shadow of a floating object in the liquid in the container 400 from each of the frame images. For example, the acquisition unit 241 detects a shadow of a floating object in the liquid by a method as described below. However, the acquisition unit 241 may detect a shadow of a floating object in the liquid by a method other than that described below.

First, the acquisition unit 241 performs binarization on each of the frame images to create a binary frame image. Then, the acquisition unit 241 detects a shadow of a floating object from each binary frame image as described below.

First, the acquisition unit 241 handles a binary frame image from which a shadow of a floating object is to be detected as a focused binary frame image. Then, the acquisition unit 241 creates a difference image between the focused binary frame image and a binary frame image whose imaging time is late by Δt. Here, Δt is set to a time of a degree at which the same floating objects partially overlap in the two images or appear at close proximate positions although not overlapping. Therefore, the time difference Δt is set according to the nature of the liquid or the foreign object, the flowing state, or the like. In the difference image, the image portions that match each other in the two binary frame images are deleted, and only different image portions are remained. Therefore, the contours or scratches of the container 400 that appear at the same positions in the two binary frame images are deleted, and only a shadow of a floating object appear. The acquisition unit 241 detects a shadow of the focused binary frame image corresponding to the portion where a shadow appears in the difference image, as a shadow of a floating object existing in the focused binary frame image.

The acquisition unit 241 tracks the detected floating object in the time-series images, and creates the tracking information 233 according to the tracking result. First, the acquisition unit 241 initializes the tracking information 233. In the initialization, a container ID of the container 400 is set in the entry of the container ID 2331 in Fig. 4. Then, the acquisition unit 241 tracks the floating object in the time-series images, and according to the tracking result, creates an entry of a set of the tracking ID 2332 and the pointer 2333 in Fig. 4 and the moving locus information 2334 for each floating object, by the method as described below.

First, the acquisition unit 241 focuses on a binary frame image whose imaging time is the oldest in the time-series binary frame images created as described above. Then, for each floating object detected in the focused binary frame image, the acquisition unit 241 assigns a unique tracking ID. Then, for each detected floating object, the acquisition unit 241 sets the tracking ID assigned to the detected floating object in the focused binary frame image in the field of the tracking ID 2332 in Fig. 4, sets the imaging time of the focused binary frame image in the field of the time 23341 in the top entry of the moving locus information 2334 indicated by the corresponding pointer 2333, and sets the coordinate values, the size, the luminance distribution, and the shape of the floating object in the focused binary frame image in the fields of the position information 23342, the size 23343, the luminance distribution 23344, and the shape 23345.

Then, the acquisition unit 241 moves the focus to a binary frame image that is one frame behind the focused binary frame image. Then, the acquisition unit 241 focuses on a floating object detected in the focused binary frame image. Then, the acquisition unit 241 compares the position of the focused floating object with the position of the floating object detected in the binary frame image that is one frame before it (hereinafter referred to as previous binary frame image). When there is a floating object within a predetermined threshold distance from the focused floating object, the acquisition unit 241 determines that the focused floating object and the floating object existing within the threshold distance are the same floating object. In that case, the acquisition unit 241 assigns, to the focused floating object, the tracking ID assigned to the floating object determined to be the same floating object. Then, the acquisition unit 241 secures a new entry in the moving locus information 2334 indicated by the pointer 2333 of the entry of the tracking information 233 in which the assigned tracking ID 2332 is set, and sets the imaging time of the focused binary frame image, and the coordinate values, the size, the luminance distribution, and the shape of the focused floating object, in the time 23341, the position information 23342, the size 23343, the luminance distribution 23344, and the shape 23345 of the secured entry.

On the other hand, when there is no floating object within the threshold distance from the focused floating object in the previous binary frame image, the acquisition unit 241 determines that the focused floating object is a new floating object, and assigns a new tracking ID. Then, the acquisition unit 241 sets the tracking ID assigned to the focused floating object in the field of the tracking ID 2332 in Fig. 4 of the newly secured entry, sets the imaging time of the focused binary frame image in the field of the time 23341 in the top entry of the moving locus information 2334 indicated by the corresponding pointer 2333, and sets the coordinate values, the size, the luminance distribution, and the shape of the focused floating object in the fields of the position information 23342, the size 23343, the luminance distribution 23344, and the shape 23345.

Upon completion of the processing for the focused floating object, the acquisition unit 241 moves the focus to the next floating object detected in the focused binary frame image, and repeats the same processing as that described above. Then, upon completion of focusing on all floating objects detected in the focused binary frame image, the acquisition unit 241 moves the focus to a frame image that is one frame behind, and repeats the same processing as that described above. Then, upon completion of focusing up to the last frame image in the image information 232, the acquisition unit 241 ends the tracking process.

In the above description, the acquisition unit 241 performs tracking based on the distance between floating objects in the adjacent two frame images. However, the acquisition unit 241 may perform tracking based on the distance between floating objects in two frame images adjacent to each other with n frames (n is 1 or larger positive integer) being interposed between them. Moreover, the acquisition unit 241 may perform tracking by comprehensively determining a tracking result obtained by performing tracking based on the distance between floating objects in two adjacent frame images with m (m is 0 or larger positive integer) frames being interposed between them, and a tracking result obtained by performing tracking based on the distance between floating objects in two adjacent frame images with m+j frames (j is 1 or larger positive integer) being interposed between them.

Next, details of the detection unit 242 will be described.

The detection unit 242 reads out the tracking information 233 from the storage unit 230, and for each moving locus tracking information 2334 of the floating object included in the tracking information 233, identifies the type (class) of the floating object on the basis of the moving locus information 2334. The number of identification classes may be seven classes in total, namely a bubble class, a hair/fabric piece class, a plastic piece class, a rubber piece class, a glass class, a metal class, and the other class, but is not limited thereto, and any number is acceptable if it is two or more classes. For example, the detection unit 242 identifies the class of each floating object by using the fact that the characteristics of the moving loci of the floating objects and the characteristics of the outer appearances (shape, luminance distribution, size) of the floating objects, recognized from the moving locus information 2334 of the floating object, are different between a bubble and a foreign object, and they are also different depending on the type of the foreign object.

For example, there are differences in the characteristics of the moving loci as described blow between a bubble and a foreign object. A bubble having an overwhelmingly smaller specific gravity than that of liquid shows a strong tendency of moving in the anti-gravity direction in the liquid. On the contrary, a foreign object having a larger specific gravity than that of a bubble does not have a strong tendency of moving in the anti-gravity direction in the liquid. This tendency is prominent in a foreign object having a larger specific gravity. For example, a hair/fabric piece does not have a large difference in the specific gravity from that of liquid. Therefore, a hair/fabric piece tends to flow in the liquid. A plastic piece has a smaller specific gravity than that of liquid although it is not as small as a bubble. Therefore, a plastic piece tends to float near the liquid surface. A rubber piece, a glass piece, and a metal piece have larger specific gravities than that of liquid. Therefore, they tend to float or locate near the bottom surface.

Further, there are differences in the outer appearance characteristics as described blow between a bubble and a foreign object. A bubble tends to have a hollow shape such as a ring shape or a doughnut shape, but a foreign object has no such tendency. A hair/fabric piece tends to have a long and narrow shape. A glass piece tends to have a large luminance difference within the detection region (floating object region), but a metal piece hardly has a luminance difference within the detection region.

As a specific method of identifying the class of a floating object by the detection unit 242 on the basis of the moving locus information 2334 of the floating object, various methods may be considered. For example, the detection unit 242 may be configured to input the moving locus information 2334 of the floating object into a learning model that learned by machine learning for estimating a class of a floating object from the moving locus information of a floating object, acquire an identification class and an identification score of the floating object from the learning model, and determine an identification class having the highest identification score to be the identification class of the floating object. The learning model can be generated in advance by machine learning using a machine learning algorism such as a neural network by using a pair of moving locus information of a floating object and a correct label representing the class of the floating object as training data. However, the method of identifying the class of a floating object on the basis of the moving locus information 2334 of the floating object by the detection unit 242 is not limited to the method described above, and a rule-based model may be used.

The detection unit 242 creates the inspection result information 234 corresponding to the determination result of each floating object information 2334 of the floating object, and stores it in the storage unit 230. For example, the detection unit 242 first creates the initialized inspection result information 234 in the storage unit 230, and sets the container ID 2331 of the tracking information 233 in the entry of the container ID 2341 of the inspection result information 234. Then, the detection unit 242 counts the total number of the floating objects determined to be foreign objects, and when the count value is 0, set OK (inspection passed) in the entry of the inspection result 2342 of the inspection result information 234, and sets a value 0 in the entry of the number of detected foreign objects 2343. When the total number of the floating objects determined to be foreign objects is one or more, the detection unit 242 sets NG (inspection failed) in the entry of the inspection result 2342 of the inspection result information 234, and sets the total number of the floating objects determined to be foreign objects in the entry of the number of detected foreign objects 2343. Then, the detection unit 242 counts the total number of the floating objects determined to be bubbles, and sets the count value in the entry of the number of detected bubbles 2344 of the inspection result information 234.

Then, for each of the floating objects determined to be a foreign object, the detection unit 242 creates an entry of a set of the detected foreign object ID 2345 and a pointer 2346, and the detected foreign object information 2349 indicated by the pointer 2346, in the inspection result information 234. Further, in the field of the detected foreign object ID 2345, the detection unit 242 sets an ID such as a serial number for distinguishing the foreign object detected from the container 400 subject to inspection identified with the container ID 2341, from other foreign objects. Further, in the field of the tracking ID 23491 in the detected foreign object information 2349, the detection unit 242 sets the tracking ID 2332 given by the tracking information 233 to the floating object determined to be a foreign object. In the field of the pointer 23492, the detection unit 242 sets a pointer to the moving locus information 2334. Further, the detection unit 242 sets the type of the determined foreign object in the entry of the foreign object type 23493. Further, the detection unit 242 sets a still image in which the moving locus information 2334 of the detected foreign object is visualized, in the entry of the moving locus still image 23494. The detection unit 242 also sets a moving image in which the moving locus information 2334 of the detected foreign object is visualized, in the entry of the moving locus moving image 23495.

Then, for each of the floating objects determined to be a bubble, the detection unit 242 creates an entry of a set of the detected bubble ID 2347 and the pointer 2348, and the detected bubble information 2350 indicated by the pointer 2348, in the inspection result information 234. Further, in the field of the detected bubble ID 2347, the detection unit 242 sets an ID such as a serial number for distinguishing the bubble, detected from the container 400 subject to inspection identified with the container ID 2341, from other bubbles. Further, in the field of the tracking ID 23501 in the detected bubble information 2350, the detection unit 242 sets the tracking ID 2332 given by the tracking information 233 to the floating object determined to be a bubble. Further, the detection unit 242 sets a pointer to the moving locus information 2334 in the field of the pointer 23502. Further, the detection unit 242 sets text describing that it is a "bubble", in the entry of the determination result (bubble) 23503. Further, the detection unit 242 sets a still image in which the moving locus information 2334 is visualized, in the entry of the moving locus still image 23504. The detection unit 242 also sets a moving image in which the moving locus information 2334 is visualized, in the entry of the moving locus moving image 23505.

Next, the display control unit 243 will be described in detail.

The display control unit 243 performs control to output the inspection result information 234 to the display device 300. The display control unit 243 reads the inspection result information 234 from the storage unit 230 upon creation of the inspection result information 234 with respect to the container 400 subject to inspection by the detection unit 242. Then, the display control unit 243 creates an inspection result display screen on the basis of the read inspection result information 234. Then, the display control unit 243 allows the display device 300 to display the created inspection result display screen.

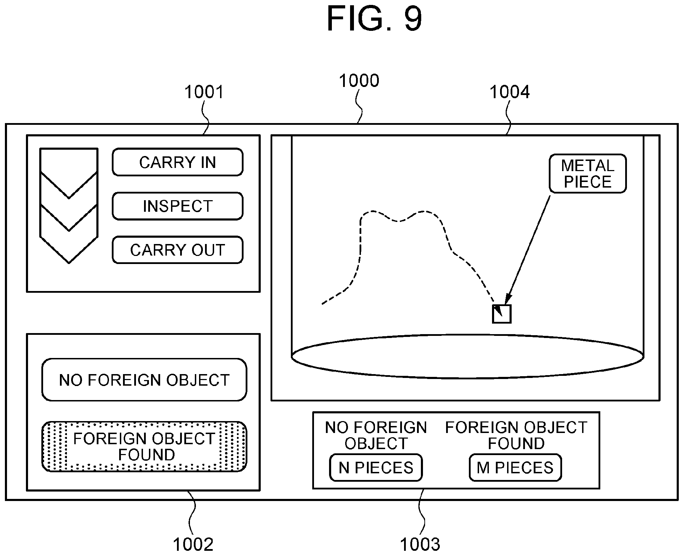

Fig. 9 illustrates an example of an inspection result display screen 1000 shown on the display device 300. In this example, the display control unit 243 displays, on the inspection result display screen, a progress state indicator 1001, a foreign object presence/absence indicator 1002, a cumulative total indicator 1003, and a moving locus still image 1004. The progress state indicator 1001 shows whether the inspection device 200 is in a state where the container 400 subject to inspection is carried in the inspection device 200, in a state where the conveyed container 400 is under inspection in the inspection device 200, or in a state where the container 400 in which the inspection has been completed is carried out from the inspection device 200. The foreign object presence/absence indicator 1002 shows whether or not at least one foreign object is detected in the container 400 being inspected. The cumulative total indicator 1003 shows the total number of containers in which no foreign object has been found and the total number of containers in which any foreign objects have been found, among all of the containers 400 whose inspection has been completed up to the current point out time. The moving locus still image 1004 shows a moving locus still image described with reference to Fig. 6.

Further, when the display field 234943 showing the type of the foreign object shown on the moving locus still image 1004 of the inspection result display screen 1000 is designated by clicking or the like by the operator via the operation input unit 220, the display control unit 243 acquires the factor set in the foreign object contamination factor information 236 corresponding to the type of the foreign object shown on the display field 234943, and displays it on the screen of the display device 300. As a result, the operator or the like of the inspection device 200 can immediately recognize the factor of the foreign object contamination.

Further, when the index 234944 showing the part serving as the determination basis of the foreign object shown on the moving locus still image 1004 of the inspection result display screen 1000 is designated by clicking or the like by the operator via the operation input unit 220, the display control unit 243 reads out the moving locus moving image 23495 of the detected foreign object information 2349 having the moving locus still image 1004 from the storage unit 230, and plays back the readout moving locus moving image 23495 and displays it on the screen of the display device 300. At that time, the display control unit 243 may play back and display only the moving locus moving image 23495, or synthesize the moving images of moving loci of all foreign objects detected from the same container 400 and display it on the screen of the display device 300, or synthesize the moving images of moving loci of all foreign objects and bubbles detected from the same container 400 and displays it on the screen of the display device 300.

As described above, according to the present embodiment, the inspection device 200 includes the detection unit 242 that detects a foreign object and the type thereof existing in the liquid from a plurality of images obtained by continuously capturing the container 400 filled with the liquid, and the display control unit 243 that displays the type of the detected foreign object on the display device 300. Therefore, the operator or the like of the inspection device 200 can recognize the type of the foreign object in addition to the fact that the foreign object is mixed in the liquid in the container 400. Therefore, it is possible to easily and promptly specify the foreign object contamination route, compared with the case where the type of the foreign object is not shown.

Next, modifications of the present embodiment will be described.

### <Modification 1>

In the above embodiment, the acquisition unit 241 causes the container 400 to stand still at the upright posture after rotating, tilting, or shaking the container 400 by the holding device 110, and continuously captures images of the liquid in the container in a stationary state with the camera device 130, to thereby acquire the image information 232. However, there is a case where a foreign object such as a metal piece having a large specific gravity merely moves along the bottom surface although the container 400 is shaken and does not float. Moreover, when the container 400 is caused to be in a stationary state, the metal piece moving on the bottom surface stops the motion, so that it may be considered as a scratch on the container and not be detected. Therefore, the acquisition unit 241 may be configured to acquire the image information 232 by continuously capturing the images of the liquid near the bottom surface in the container 400 with the camera device 130 during rotation of the container 400 by the holding device 110. Moreover, the detection unit 242 may be configured to detect a foreign object moving along the bottom surface of the container 400 on the basis of a plurality of continuous images acquired during rotation of the container 400. Furthermore, the display control unit 243 may be configured to display, on the screen of the display device 300, the moving locus and image patch of a foreign object detected on the bottom surface of the container 400 and the type of the foreign object. Hereinafter, the details thereof will be described.

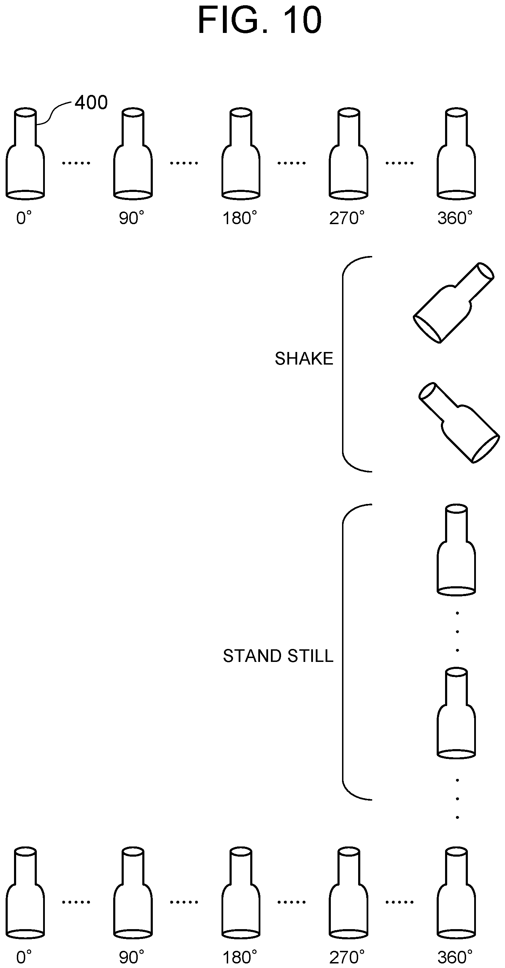

First, the acquisition unit 241 holds the container 400 with the holding device 110 at an upright posture with the central axis of the container 400 being parallel to the gravity direction. At that time, the rotation angle around the central axis of the container 400 is set to be 0° as illustrated in Fig. 10. Then, as illustrated in Fig. 10, the acquisition unit 241 continuously captures the images of the liquid near the bottom surface of the container 400 with the camera device 130 while rotating the container 400 in one direction about the central axis from 0° toward 360° at a constant rotational speed by the holding device 110. As a result, images of the vicinity of the bottom surface of the container 400 are obtained for each predetermined angle. An image group obtained at this time is referred to as a first image group.

Then, as illustrated in Fig. 10, the acquisition unit 241 allows the container 400 to be shaken or tilted by the holding device 110, and then causes the container 400 to stand still at an upright posture for a certain period of time. As a result, the liquid in the container 400 flows, and accordingly a foreign object having a small specific gravity becomes a state of floating in the liquid. However, a foreign object such as a metal piece having a large specific gravity merely moves along the bottom surface of the container 400 even in the state of being shaken, and does not necessarily float.

Then, as illustrated in Fig. 10, the acquisition unit 241 continuously captures the images of the liquid near the bottom surface of the container 400 with the camera device 130 while inversely rotating the container 400 about the central axis from 360° toward 0° at a constant rotational speed by the holding device 110. As a result, images of the vicinity of the bottom surface of the container 400 are obtained for each predetermined angle. An image group obtained at this time is referred to as a second image group.

The detection unit 242 acquires a difference image between each image included in the second image group acquired by the acquisition unit 241 and an image included in the first image group captured at the same angle, and detects a foreign object existing on the bottom surface of the container 400, on the basis of the difference image. For example, a scratch or the like on the container existing on the bottom surface of the container 400 is captured at the same location in the two images captured at the same angle, so it does not appear on the difference image. On the contrary, a foreign object existing on the bottom surface of the container moves to the original location to a different location by the shaking of the container 400, so that a shadow appears in the difference image. The acquisition unit 241 detects the shadow appearing in the difference image as a foreign object.

Further, the detection unit 242 acquires the shape of the foreign object, luminance distribution, size, and the like from the image (image patch) of the shadow appearing in the difference image. Furthermore, the detection unit 242 computes the moving locus of the foreign object showing the relative movement of the foreign object with respect to the container 400 from the time-series of the difference images. Then, the detection unit 242 determines the type of the foreign object from at least one of the shape of the foreign object, the luminance distribution, the size, and the moving locus. For example, the detection unit 242 determines that it is a glass piece when there is a large luminance difference within the shadow region, and determines that it is a metal piece when there is little luminance difference.

Then, the display control unit 243 is configured to display, on the screen of the display device 300, presence/absence of a foreign object and the type of the foreign object detected on the bottom surface of the container 400.

### <Modification 2>

An embodiment including the above-described embodiment and the modification 1 is also acceptable. That is, the shaking period illustrated in Fig. 10 may be a period that the acquisition unit 241 causes the container 400 to be shaken or tilted for a certain period of time by the acquisition unit 241 as similar to step S1 of Fig. 8. Moreover, the stationary period illustrated in Fig. 10 may be a period of continuously capturing images of the container 400 in the stationary state by the acquisition unit 241 with the camera device 130, as similar to step S2 in Fig. 8.

### <Modification 3>

In the above embodiment, the type of a foreign object is classified by the material such as a hair/fabric piece, a plastic piece, a rubber piece, a glass piece, and a metal piece, but the type of a foreign object may be defined by that other than the material. For example, on the basis of the specific gravity of the liquid in the container 400, a foreign object may be classified into a floating foreign object having a smaller specific gravity than that of liquid, a sedimentary foreign object having a larger specific gravity than that of liquid, and a buoyant foreign object having a specific gravity similar to that of the liquid.

### [Second Example Embodiment]

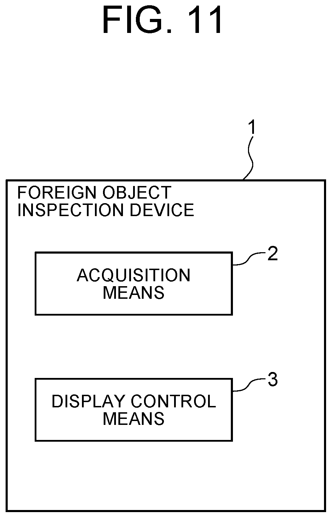

Next, a second example embodiment of the present invention will be described with reference to Fig. 11.

Referring to Fig. 11, a foreign object inspection device 1 according to the present embodiment includes a detection means 2 and a display control means 3.

The detection means 2 is configured to detect a foreign object existing in the liquid and the type thereof from a plurality of images obtained by continuously capturing the container in which the liquid is contained. The detection means 2 may be configured similarly to the detection unit 242 of Fig. 2, but is not limited thereto.

The display control means 3 is configured to output the type of the foreign object detected by the detection means 2, to the display device. The display control means 3 may be configured similarly to the display control unit 243 of Fig. 2, but is not limited thereto.

The foreign object inspection device 1 configured as described above operates as described below. That is, the detection means 2 detects a foreign object existing in the liquid and the type thereof from a plurality of images obtained by continuously capturing the container in which the liquid is contained. Then, the display control means 3 outputs the type of the foreign object detected by the detection means 2, to the display device.

According to the foreign object inspection device that is configured and operates as described above, since the type of the detected foreign object is shown on the display device, the type of the foreign object can be recognized.

While the present invention has been described with reference to the example embodiments described above, the present invention is not limited to the above-described embodiments. The form and details of the present invention can be changed within the scope of the present invention in various manners that can be understood by those skilled in the art.

### INDUSTRIAL APPLICABILITY

The present invention is applicable to the field of detecting a foreign object and the type thereof in the liquid such as medical agents and medical supplies contained in a container.

The whole or part of the example embodiments disclosed above can be described as, but not limited to, the following supplementary notes.

### (Supplementary Note 1)

A foreign object inspection device comprising:
detection means for detecting a foreign object existing in liquid and a type of the foreign object from a plurality of images obtained by continuously capturing a container in which the liquid is contained; and
display control means for outputting the type of the detected foreign object to a display device.

### (Supplementary Note 2)

The foreign object inspection device according to supplementary note 1, wherein
the display control means further outputs a moving locus image of the foreign object in a still image, to the display device.

### (Supplementary Note 3)

The foreign object inspection device according to supplementary note 2, wherein
the display control means further outputs an index indicating a part serving as a basis for detecting the foreign object in the moving locus image.

### (Supplementary Note 4)

The foreign object inspection device according to supplementary note 3, wherein
when the index is designated, the display control means further outputs the moving locus image of the foreign object in a moving image, to the display device.

### (Supplementary Note 5)

The foreign object inspection device according to any of supplementary notes 1 to 4, wherein
the display control means further outputs information related to a factor of contamination of the foreign object, to the display device.

### (Supplementary Note 6)

The foreign object inspection device according to any of supplementary notes 1 to 5, wherein
the display control means further outputs a type of a foreign object floating in the liquid in the container, to the display device.

### (Supplementary Note 7)

The foreign object inspection device according to any of supplementary notes 1 to 6, wherein

the display control means further outputs a type of a foreign object existing on a bottom surface of the container, to the display device.

### (Supplementary Note 8)

A foreign object inspection method comprising:
detecting a foreign object existing in liquid and a type of the foreign object from a plurality of images obtained by continuously capturing a container in which the liquid is contained; and
outputting the type of the detected foreign object to a display device.

### (Supplementary Note 9)

The foreign object inspection method according to supplementary note 8, wherein
the displaying further includes outputting a moving locus image of the foreign object in a still image, to the display device.

### (Supplementary Note 10)

The foreign object inspection method according to supplementary note 9, wherein
the displaying further includes outputting an index indicating a part serving as a basis for detecting the foreign object in the moving locus image.

### (Supplementary Note 11)

The foreign object inspection method according to supplementary note 10, wherein
the displaying further includes, when the index is designated, outputting the moving locus image of the foreign object in a moving image, to the display device.

### (Supplementary Note 12)

The foreign object inspection method according to any of supplementary notes 8 to 11, wherein
the displaying further includes outputting information related to a factor of contamination of the foreign object, to the display device.

### (Supplementary Note 13)

The foreign object inspection method according to any of supplementary notes 8 to 12, wherein
the displaying further includes outputting a type of a foreign object floating in the liquid in the container, to the display device.

### (Supplementary Note 14)

The foreign object inspection method according to any of supplementary notes 8 to 13, wherein
the displaying further includes outputting a type of a foreign object existing on a bottom surface of the container, to the display device.

### (Supplementary Note 15)

A computer-readable medium storing thereon a program for causing a computer to execute processing to:
detect a foreign object existing in liquid and a type of the foreign object from a plurality of images obtained by continuously capturing a container in which the liquid is contained; and
output the type of the detected foreign object to a display device.

### REFERENCE SIGNS LIST

- 100: inspection system
- 110: holding device
- 120: illumination device
- 130: camera device
- 200: inspection device
- 300: display device
- 400: container
- 401: rubber stopper

## Claims

1. A foreign object inspection device comprising:
detection means for detecting a foreign object existing in liquid and a type of the foreign object from a plurality of images obtained by continuously capturing a container in which the liquid is contained; and
display control means for outputting the type of the detected foreign object to a display device.

2. The foreign object inspection device according to claim 1, wherein
the display control means further outputs a moving locus image of the foreign object in a still image, to the display device.

3. The foreign object inspection device according to claim 2, wherein
the display control means further outputs an index indicating a part serving as a basis for detecting the foreign object in the moving locus image.

4. The foreign object inspection device according to claim 3, wherein
when the index is designated, the display control means further outputs the moving locus image of the foreign object in a moving image, to the display device.

5. The foreign object inspection device according to any of claims 1 to 4, wherein
the display control means further outputs information related to a factor of contamination of the foreign object, to the display device.

6. The foreign object inspection device according to any of claims 1 to 5, wherein
the display control means further outputs a type of a foreign object floating in the liquid in the container, to the display device.

7. The foreign object inspection device according to any of claims 1 to 6, wherein
the display control means further outputs a type of a foreign object existing on a bottom surface of the container, to the display device.

8. A foreign object inspection method comprising:
detecting a foreign object existing in liquid and a type of the foreign object from a plurality of images obtained by continuously capturing a container in which the liquid is contained; and
outputting the type of the detected foreign object to a display device.

9. The foreign object inspection method according to claim 8, wherein
the displaying further includes outputting a moving locus image of the foreign object in a still image, to the display device.

10. The foreign object inspection method according to claim 9, wherein
the displaying further includes outputting an index indicating a part serving as a basis for detecting the foreign object in the moving locus image.

11. The foreign object inspection method according to claim 10, wherein
the displaying further includes, when the index is designated, outputting the moving locus image of the foreign object in a moving image, to the display device.

12. The foreign object inspection method according to any of claims 8 to 11, wherein
the displaying further includes outputting information related to a factor of contamination of the foreign object, to the display device.

13. The foreign object inspection method according to any of claims 8 to 12, wherein
the displaying further includes outputting a type of a foreign object floating in the liquid in the container, to the display device.

14. The foreign object inspection method according to any of claims 8 to 13, wherein
the displaying further includes outputting a type of a foreign object existing on a bottom surface of the container, to the display device.

15. A computer-readable medium storing thereon a program for causing a computer to execute processing to:
detect a foreign object existing in liquid and a type of the foreign object from a plurality of images obtained by continuously capturing a container in which the liquid is contained; and
output the type of the detected foreign object to a display device.
